# FASCICULE DE BREVET EUROPEEN

(11) **EP 2 317 214 B1**
(45) Date de publication et mention de la délivrance du brevet: **29.07.2020**
(21) Numéro de dépôt: 10187530.0
(22) Date de dépôt: 14.10.2010
(51) Int. Cl.: F21S 41/24, F21V 5/00

(54) **Dispositif d'éclairage et/ou de signalisation pour véhicule automobile comprenant un guide de lumière**
Vorrichtung zur Beleuchtung und/oder Signalisierung für Kraftfahrzeuge, die einen Lichtwellenleiter umfasst
Lighting and/or signalling device for an automobile comprising a light guide

(30) Priorité: 02.11.2009 FR 0957721
(43) Date de publication de la demande: 04.05.2011
(73) Titulaire: Valeo Vision, 93012 Bobigny (FR)
(72) Inventeur: Martin, Laure, 89100, SENS (FR); Thierry, Benjamin, 10190, PALIS (FR); Gasquet, Jean-Claude, 89100, SAINT CLEMENT (FR)

(56) Documents cités:
- EP-A1- 1 895 228
- EP-A1- 2 012 056
- DE-A1-102007 019 688

## Description

La présente invention a pour objet un dispositif d'éclairage et/ou de signalisation pour véhicule automobile comprenant un guide de lumière.

Le domaine de l'invention est, d'une façon générale, celui de l'éclairage et de la signalisation appliqué aux véhicules automobiles. Dans ce domaine, on connaît différents types de dispositifs, parmi lesquels on trouve essentiellement les dispositifs suivants, directement concernés par l'invention:
- des dispositifs d'éclairage situés à l'arrière du véhicule avec, notamment, les feux de recul ;
- des dispositifs de signalisation situés à l'avant (ou sur le côté) du véhicule avec, notamment, des indicateurs de direction, des rappels de clignotants ;
- des dispositifs de signalisation situés à l'arrière du véhicule avec, notamment, des feux antibrouillards, des feux arrière, des indicateurs de direction et des feux stop, des feux "stop supérieur" ;
- des dispositifs d'éclairage intérieur avec notamment les plafonniers principaux (Avant, Central, Arrière) ;
- des dispositifs d'éclairage participant au style, avec par exemple des lignes de style éclairées sur les ailes du véhicule ou sur le tableau de bord, l'habillage de portières ou encore l'éclairage du pavillon de toit.

Pour l'ensemble de ces dispositifs, traditionnellement, on utilisait par le passé des sources lumineuses de type lampes classiques ou éventuellement des lampes halogènes. Mais depuis quelques années, les équipementiers automobiles ont proposé l'utilisation de diodes électroluminescentes, encore appelées DEL ou DEL, notamment pour les feux de signalisation. Les diodes électroluminescentes présentent un certain nombre d'avantages :
- tout d'abord, depuis longtemps, on sait que ce type de diodes ne rayonnent pas de façon omnidirectionnelle, mais rayonnent dans un demi-espace opposé à un substrat qui supporte la jonction P-N de la diode considérée ; plus précisément, une DEL émet un ensemble de signaux lumineux compris dans un cône dans le demi-plan considéré. Ainsi, en utilisant un rayonnement plus directif que les lampes halogènes, ou à décharge, de l'état de la technique, la quantité d'énergie perdue est moins importante qu'avec les lampes à décharge ou halogènes ;
- ensuite, on a récemment perfectionné ces diodes en terme d'intensité de rayonnement ; elles peuvent désormais rayonner un flux d'environ 100 lumens. De plus, les diodes fabriquées émettent un rayonnement depuis longtemps dans le rouge, mais désormais également dans le blanc, ce qui accroît le champ de leurs utilisations envisageables. La quantité de chaleur qu'elles dégagent est relativement limitée, et un certain nombre de contraintes, liées à la dissipation de la chaleur dans les dispositifs projecteurs de l'état de la technique, disparaissent ;
- enfin, les diodes consomment moins d'énergie, même à intensité de rayonnement égal, que les lampes à décharge ou les lampes halogènes ; elles sont peu encombrantes, et leur forme particulière offre des possibilités nouvelles pour la réalisation de nouvelles gammes de style.

D'une façon générale, les diodes électroluminescentes sont disposées sur un support de type substrat, qui est, selon une définition générale, un matériau destiné à recevoir les électrodes de connexion de la DEL. Celui-ci est ensuite fixé sur un circuit imprimé, ou PCB (pour « Printed Circuit Board » en langue anglaise). On peut parfois trouver des réalisations ou le substrat est une partie du PCB.

On peut distinguer notamment deux types de diodes : les diodes dites à émission axiale, qui émettent un faisceau lumineux selon un cône avec une direction principale d'émission sensiblement perpendiculaire au plan du PCB les supportant, et les diodes dites à émission latérales, qui émettent un faisceau lumineux dans une direction principale présentant un angle d'une vingtaine de degrés par rapport au plan du PCB les supportant.

Les DEL sont ainsi de plus en plus fréquemment utilisées dans différents dispositifs d'éclairage ou de signalisation, d'autant plus qu'elles permettent d'obtenir des évolutions notables en terme de style des dispositifs projecteurs. On les utilise ainsi de plus en plus souvent pour servir de sources lumineuses associées à des guides de lumière.

D'une façon générale, les guides de lumière utilisées dans le monde automobile assurent la propagation des rayons lumineux émis par la source à laquelle ils sont couplés, selon une direction principale d'émission globalement perpendiculaire à leur plus grande dimension, le plus souvent son épaisseur. Cette propagation se fait par plusieurs réflexions internes sur ses faces externes. Les guides de lumière se caractérisent par leur épaisseur nettement plus faible que leur longueur, le rapport entre ces dimensions étant fréquemment compris entre dix et vingt.

Les signaux lumineux circulant à l'intérieur des guides de lumière sont typiquement émis par des DEL, disposées de manière à ce que la lumière des DEL passe au travers de la tranche du guide de lumière considéré. Si les guides de lumière offrent la possibilité de proposer des dispositifs d'éclairage et de signalisation présentant une grande diversité de formes et d'aspect, il demeure cependant, selon les circonstances de leur utilisation, des inconvénients à leur emploi pour la réalisation de différentes fonctions. Un inconvénient majeur réside dans les aspects pointillistes, pixellisés, de la lumière diffusée au travers de la face visible des guides de lumière : du fait de leur principe de base, mêlant, sur une longueur relativement importante, un nombre important de réflexions internes et de diffusions au travers de leur face visible, le pilotage précis de la lumière à émettre selon une direction principale d'émission est impossible à réaliser. Un tel principe de base entraîne par ailleurs un rendement optique faible.

Pour répondre aux problèmes qui viennent d'être exposés, le document EP-A-1 895 228 divulgue un guide de lumière dans lequel la lumière émise, toujours par des DEL, est émise directement selon un, ou proche d'un, axe d'éclairage principal (axe dans lequel une intensité maximale du dispositif d'éclairage ou de signalisation considéré est mesurée) du dispositif d'éclairage ou de signalisation considéré. Dans le guide de lumière, les signaux lumineux suivent ainsi un chemin optique déterministe, en grande partie intégré à la matière, qui peut être contrôlé et maîtrisé par des systèmes optiques présents dans ledit module.

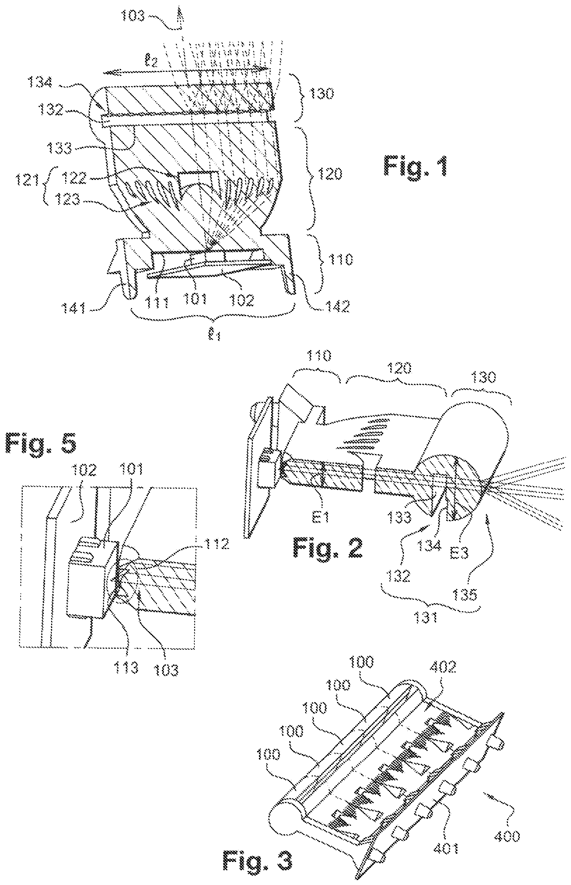

Les figures 1 à 3 montrent un premier exemple d'un guide de lumière 100 intervenant dans de tels dispositifs d'éclairage. Le guide de lumière 100 est associé à une DEL 101 unique, à émission axiale dans l'exemple représenté. La DEL 101 est supportée par une carte de circuit imprimé 102. La DEL 101 émet une pluralité de rayons lumineux contenus dans un cône d'émission, dirigé vers le guide de lumière 100, et présentant un axe central 103 centré sur la diode et perpendiculaire au plan du PCB 102.

On peut décomposer le guide de lumière 100 en trois zones principales :
- Une première zone 110 correspond à une zone d'entrée du guide de lumière 100 comportant un premier système optique 112, ou système optique d'entrée, dont la fonction est de collimater, dans l'épaisseur d'entrée E1, les signaux lumineux reçus. D'une façon générale, l'expression collimater des signaux lumineux dans une dimension (longueur, largeur, épaisseur...) donnée signifie que les faisceaux considérés sont déviés de façon à se propager selon des directions parallèles aux plans délimitant la dimension considérée. Ainsi, dans l'exemple représenté, si on considère, par convention, que le plan du PCB 102 est orienté verticalement, alors les signaux lumineux collimatés dans l'épaisseur de la zone d'entrée 110 sont horizontaux.
- Une deuxième zone 120, formant la continuité de la zone d'entrée 110, correspond à une zone centrale du guide de lumière 100. Elle comporte un deuxième système optique 121, composé ici d'une lentille centrale 122 intégrée dans le guide de lumière 100 et d'une pluralité de stries 123, consistant en des cavités verticales réalisées dans l'épaisseur de ladite zone centrale. La fonction du deuxième système optique 121 est de recevoir les faisceaux collimatés par le premier système optique, et de les collimater dans des plans verticaux. Du fait de la première collimation qu'ils ont subie lors du passage dans le premier système optique 112, les signaux lumineux issus du deuxième système optique 121 sont parallèles à l'axe central 103 du cône d'émission de la DEL 101. On dispose ainsi, en sortie du deuxième système optique 121, d'un flux de signaux lumineux parfaitement pilotés, déterministe.
- Une troisième zone 130, formant la continuité de la zone centrale 120, correspond à une zone de sortie du guide de lumière 100. La zone de sortie 130 comporte un troisième système optique 131, qui peut se décomposer en deux parties principales pour homogénéiser le faisceau lumineux :
- une première partie est constituée par une tranchée 132 comportant une face d'entrée 133 et une face de sortie 134 qui constituent des dioptres. Au moins l'une de ces deux faces, présente des formes appropriées pour étaler le signal lumineux en une pluralité de signaux contenus ici dans un plan horizontal.
- une deuxième partie est constituée par une face de sortie 135 du guide de lumière lui-même dont la forme permet d'assurer un étalement vertical des signaux lumineux en sortie du guide de lumière 100, comme montré schématiquement à la figure 2.

La forme générale du guide de lumière 100, et la présence des pions de fixation 141 et 142 permettent de réaliser aisément une barrette monobloc 402 du type de celle montrée à la figure 3, où cinq modules de diffusion 100, ont été associés sur un même support de PCB 401, supportant cinq DEL pour former un assemblage 400. En multipliant ainsi le nombre de modules de diffusion et de diodes associées, on augmente ainsi l'intensité lumineuse disponible pour les dispositifs d'éclairage considérés.

Un problème principal des dispositifs d'éclairage ou de signalisation qui viennent d'être décrits est qu'ils offrent une souplesse relative en terme d'esthétisme : en effet, au moyen des DEL disposées sur le PCB 401, on ne peut obtenir qu'un faisceau lumineux principal qui sera orienté selon l'axe central 103, sensiblement perpendiculaire au plan du PCB 401. La présence du deuxième système optique 121, et notamment des stries 122, permet certes une légère inflexion de la direction principale d'émission, mais l'inflexion considérée est limitée à une dizaine de degrés. Mais désormais, en considérant les exigences croissantes des constructeurs en terme d'esthétisme, il apparait nécessaire de pouvoir proposer, notamment lorsque les faces de sortie des dispositifs d'éclairage et de signalisation sont courbes ou complexes, des directions principales d'éclairage qui dévient de plus de trente degrés par rapport à la perpendiculaire au PCB support des DEL. Une solution évidente consisterait à ne plus disposer les DEL d'un plan PCB, pour leur donner une direction de rayonnement plus libre ; mais le montage des DEL considérées devient alors particulièrement délicat, et on abandonnerait alors le caractère bon marché et facile d'installation des PCB support des DEL.

L'invention a essentiellement pour but de proposer une solution pour réaliser une fonction d'éclairage ou de signalisation, dans laquelle on utilise une source lumineuse couplée à un guide de lumière, tout en offrant la possibilité de réaliser de nouveaux concepts de style et présentant de hautes performances en terme de maîtrise optimale du pilotage des signaux lumineux au sein du dispositif.

D'une façon générale, l'invention propose la réalisation d'un dispositif d'éclairage ou de signalisation permettant une orientation d'un faisceau lumineux principal en sortie du dispositif déterminée par la structure de modules de diffusion présents dans le dispositif considéré, ladite orientation correspondant à une direction pouvant dévier de plusieurs dizaines de degrés par rapport à une perpendiculaire d'un plan PCB supportant les DELs générant la lumière dans le dispositif considéré.

A cet effet, dans l'invention, on propose de réaliser un guide de lumière dans lequel on a ménagé un système optique particulier comportant essentiellement un premier système de Fresnel en regard d'un deuxième système de Fresnel, dont les surfaces de diffusion coopèrent pour réorienter les rayons lumineux incidents selon une direction souhaitée. Dans la présente demande, un système de Fresnel représente une succession de facettes optiques équivalente à la discrétisation d'un prisme de plus grande dimension et réalisant la même déviation des rayons que ce prisme.

Un objet de l'invention est donc un dispositif d'éclairage et/ou de signalisation pour véhicule automobile, ledit dispositif comportant notamment au moins une source lumineuse chaque source lumineuse émettant, vers un guide de lumière du dispositif, une pluralité de rayons lumineux selon un volume d'émission présentant un axe central, ledit guide de lumière guidant les rayons lumineux de manière à produire un faisceau lumineux global émis selon une direction principale d'émission. Ce guide de lumière comporte, dans une zone centrale présentant une largeur centrale, un système optique central comportant un premier système de Fresnel et un deuxième système de Fresnel coopérant pour provoquer une déviation des rayons lumineux émis par la au moins une source lumineuse de type diode électroluminescente selon une direction globale de rayons déviés. Les premier et deuxième systèmes de Fresnel sont disposés en regard l'un de l'autre, un volume d'air étant placé entre le premier système de Fresnel et le deuxième système de Fresnel, et la direction globale de rayons déviés présente avec ledit axe central un angle supérieur à vingt degrés.

Par direction principale d'émission, on entend la direction dans laquelle une intensité maximale du guide de lumière considéré est mesurée. Par direction globale de rayons lumineux déviés, signifie que la majorité des rayons lumineux déviés sont dirigés selon une direction, à savoir cette direction globale de rayons déviés.

Ce dispositif d'éclairage et/ou de signalisation permet de bénéficier d'une direction principale d'éclairage indépendante du positionnement d'une série de diodes, par exemple disposées selon un même plan, permettant donc une adéquation entre une grande liberté dans la création des faisceaux lumineux, et l'utilisation économique et facile en terme de montage, notamment pour le montage de PCB plans.

La direction globale de rayons déviés présente avec l'axe central un angle supérieur à vingt degrés ; on peut ainsi s'affranchir facilement de l'orientation de la glace transparente de fermeture du boîtier du dispositif d'éclairage et/ou de signalisation ; selon certains modes de réalisation cet angle est supérieur à trente degrés ; l'efficacité du système permet même d'obtenir des modes de réalisation où cet angle est supérieur à cinquante degrés.

Le guide de lumière comporte un volume d'air placé entre le premier système de Fresnel et le deuxième système de Fresnel ; ceci permet de réaliser de façon simple le système de double Fresnel au moyen d'un seul évidement.

Outre les caractéristiques principales qui viennent d'être mentionnées dans le paragraphe précédent, le dispositif d'éclairage ou de signalisation selon l'invention peut présenter une ou plusieurs caractéristiques complémentaires parmi les suivantes :
- la direction globale de rayons déviés correspond à la direction principale du faisceau lumineux ; le système de double Fresnel est ainsi suffisant pour orienter le faisceau émis par le guide de lumière ;
- la source lumineuse est une diode électroluminescente, ledit volume d'émission correspondant à un cône d'émission dont l'axe correspond à l'axe central ; les DEL émettant selon un cône axial ou les DEL émettant selon un cône latéral sont particulièrement bien adaptées au dispositif selon la présente invention, du fait de l'émission des rayons dans un cône ;
- le premier système de Fresnel et le deuxième système de Fresnel présentent un écartement compris entre deux et six millimètres ; cet écartement permet un usinage plus simple du guide de lumière avec un bon rendement lumineux;
- le guide de lumière comporte un renfort inférieur globalement disposé selon un plan sensiblement perpendiculaire à des plans contenant le premier système de Fresnel et le deuxième système de Fresnel, permettant ainsi de consolider le guide de lumière entre les deux systèmes de Fresnel ;
- le guide de lumière comporte une zone d'entrée, présentant une épaisseur d'entrée, équipée d'un système optique d'entrée pour recevoir au moins une partie de la pluralité des rayons lumineux et pour collimater dans ladite épaisseur d'entrée lesdits rayons lumineux reçus ; ceci permet d'améliorer le rendement du dispositif et facilite le pilotage des rayons ;
- le guide de lumière comporte une zone de sortie, présentant une largeur de sortie, équipée d'un système optique de sortie pour recevoir et assurer une diffusion, dans ladite largeur de sortie, des rayons lumineux issus du système optique central ; ceci améliore l'homogénéisation du faisceau lumineux ;
- la zone de sortie présente une épaisseur de sortie faible devant la largeur de sortie, permettant ainsi d'avoir une bande lumineuse fine par rapport à sa longueur.
- le dispositif comprend plusieurs DEL et le premier système de Fresnel est disposé selon un plan sensiblement perpendiculaire à l'axe central des cônes d'émission des DEL, au niveau où les rayons lumineux de deux cônes consécutifs se rejoignent, cela permet d'homogénéiser davantage le faisceau en provoquant la déviation avant que les cônes lumineux ne se mélangent ;
- le guide de lumière est une pièce monobloc ; cela permet un réglage précis des deux systèmes l'un par rapport à l'autre ;
- le guide de lumière est réalisé en polyméthyle méthacrylate ou en polycarbonate.

La présente invention se rapporte également à tout dispositif projecteur intégrant un ou plusieurs dispositifs d'éclairage ou de signalisation qui vient d'être mentionné, avec ses caractéristiques principales et éventuellement une ou plusieurs caractéristiques complémentaires, la face de sortie apparente, continue, présentant un aspect semblable à celui d'un guide de lumière classique ; le dispositif projecteur selon l'invention peut notamment être d'un des types suivants : feu de recul, indicateur de direction, rappel de clignotant, feu antibrouillard, feu stop, feu stop supérieur, plafonnier, ligne de style éclairée.

Enfin, la présente invention se rapporte à tout véhicule automobile équipé d'au moins un dispositif projecteur selon l'invention.

L'invention et ses différentes applications seront mieux comprises à la lecture de la description qui suit et à l'examen des figures qui l'accompagnent. Celles-ci ne sont présentées qu'à titre indicatif et nullement limitatif de l'invention.

Les figures montrent :
- à la figure 1, déjà décrite, une représentation schématique en coupe horizontale d'un exemple de réalisation d'un guide de lumière, associé à une DEL, intervenant dans un dispositif projecteur de l'état de la technique ;
- à la figure 2, également déjà décrite, une vue en coupe verticale du guide de lumière de la figure 1, illustrant l'étalement vertical des signaux lumineux en sortie dudit module ;
- à la figure 3, une vue d'ensemble d'une barrette monobloc comportant cinq modules de diffusion de la figure 1 ;
- à la figure 4, une première vue en perspective d'un exemple de guide de lumière utilisé dans les dispositifs d'éclairage ou de signalisation selon l'invention ;
- à la figure 5, également déjà décrite, une représentation détaillée d'un premier système optique utilisé dans les dispositifs d'éclairage ou de signalisation selon l'invention et représenté en figure 4 ;
- à la figure 6, une vue en perspective d'une partie d'un exemple de guide de lumière utilisé dans les dispositifs d'éclairage ou de signalisation selon l'invention et représenté en figure 4;
- à la figure 7, une deuxième vue en perspective d'un exemple de guide de lumière utilisé dans les dispositifs d'éclairage ou de signalisation selon l'invention et représenté en figure 4 ;
- aux figures 8-A et 8-B, une première représentation schématique et une deuxième représentation schématique de la déviation des rayons lumineux dans le guide de lumière des figures 4, 6 et 7 ;
- à la figure 9, une représentation schématique d'un dispositif d'éclairage selon l'invention illustrant la diffusion des rayons lumineux produits par différentes DEL.

Les différents éléments apparaissant sur plusieurs figures auront gardé, sauf précision contraire, la même référence.

Par convention, les termes "avant" et "après" utilisés pour positionner deux éléments dans une pièce donnée désignent la position relative desdits éléments en considérant un sens de parcours des signaux lumineux dans la pièce considérée dans des conditions normales d'utilisation.

D'une manière générale, le dispositif d'éclairage et/ou de signalisation selon la présente invention comporte un guide de lumière ; pour réaliser une fonction d'éclairage classique, assurée par un dispositif projecteur. Il peut ainsi être nécessaire de regrouper plusieurs guides de lumière, chacun associé à une ou plusieurs sources lumineuses attitrées.

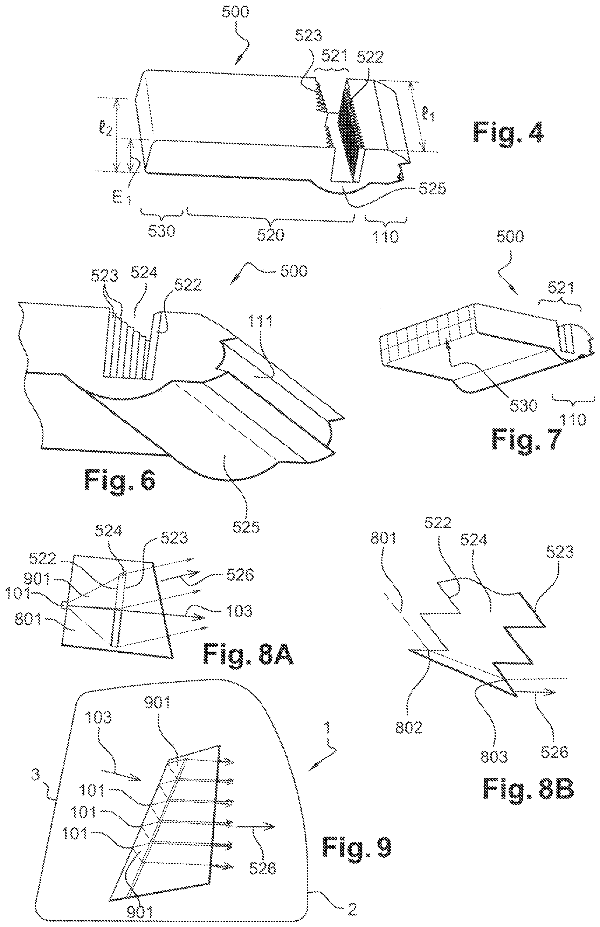

Comme illustré en figures 4 à 9, le guide de lumière 500 peut se décomposer en trois zones principales :
- Une zone d'entrée 110 comportant une face d'entrée 111. Comme illustré en figure 5, au niveau de cette zone d'entrée 111, une partie importante des rayons lumineux émis par la DEL 101 pénètre dans le guide de lumière 100. Avantageusement, c'est la totalité de ces faisceaux qui pénètre dans le guide de lumière 100. La zone d'entrée 110 se caractérise notamment par une épaisseur d'entrée E1, par exemple comprise entre 1 et 5 millimètres, et par une première largeur I1. Elle comporte également un premier système optique 112, ou système optique d'entrée, et dont la fonction est de collimater, dans l'épaisseur d'entrée E1, les rayons lumineux reçus. D'une façon générale, l'expression collimater des rayons lumineux dans une dimension (longueur, largeur, épaisseur...) donnée signifie que les faisceaux considérés sont déviés de façon à se propager selon des directions parallèles aux plans délimitant la dimension considérée. Ainsi, dans l'exemple représenté, si on considère, par convention, que l'axe du cône d'émission des rayons de la DEL 103 est orienté horizontalement, alors les rayons lumineux collimatés dans l'épaisseur de la zone d'entrée 110 sont horizontaux. Le premier système optique 112 consiste essentiellement en une lentille de Fresnel 113.
- Une deuxième zone 520, formant la continuité de la zone d'entrée 110, correspond à une zone centrale du guide de lumière 100. Elle comporte un deuxième système optique 521, ou système optique central. La zone centrale 520 est caractérisée par une largeur l2, identique dans cet exemple à la largeur l1, constante après la traversée du deuxième système optique 521. Elle présente globalement la même épaisseur E1 que la zone d'entrée 110.

La fonction du deuxième système optique 521 est de recevoir les faisceaux collimatés par le premier système optique, et de les collimater dans la largeur l2, tout en leur imposant une déviation significative. En d'autres termes, les signaux lumineux, après avoir traversé le deuxième système optique 521, sont contenus dans des plans verticaux. Du fait de la première collimation qu'ils ont subie lors du passage dans le premier système optique 112, les signaux lumineux issus du deuxième système optique 521 sont parallèles à l'axe central 103 du cône d'émission de la DEL 101, visibles sur la figure 8-A. On dispose ainsi, en sortie du deuxième système optique 521, d'un flux de signaux lumineux parfaitement pilotés, déterministe, lesdits signaux lumineux ayant été déviés par le deuxième système optique 521.

Selon l'invention, le système optique central 521 est constitué d'un premier système de Fresnel 522, ou système de Fresnel d'entrée, disposé après la zone d'entrée 110, et d'un deuxième système de Fresnel 523 disposé en regard du premier système de Fresnel 522. Le premier système de Fresnel et le deuxième système de Fresnel sont avantageusement séparés par un volume d'air 524, représentant une couche de quelques millimètres, réalisée dans la matière transparente formant le guide de lumière 500. Chaque système de Fresnel est constitué d'une surface présentant une pluralité de dents, dont la forme et l'espacement sont régis par la déviation que l'on souhaite donner aux rayons lumineux atteignant le système optique central 521. Les dents des systèmes de Fresnel sont ainsi cylindrées, convergentes ou divergentes pour réaliser des pseudo lissages du faisceau lumineux, afin d'obtenir une bonne homogénéité apparente en sortie du guide de lumière 500.

Avantageusement, afin d'assurer la liaison mécanique entre le premier système de Fresnel 522 et le deuxième système de Fresnel 523, on prévoit un renfort inférieur 525, formant une paroi inférieure du volume défini par le volume d'air 524, de forme légèrement bombée. Il s'étend ainsi selon une direction globalement perpendiculaire aux plans contenant les systèmes de Fresnel. Le renfort inférieur 525 assure la rigidité du guide de lumière 500 et assure également une fonction récupératrice de rayons lumineux.

Les figures 8-A et 8-B montrent le parcours d'un rayon lumineux 801 lors de sa traversée du deuxième système optique 521. Le faisceau lumineux 801 subit une première déviation par réfraction en un premier point de passage 802 à son arrivée sur le premier système de Fresnel 522, puis une deuxième déviation à un deuxième point de passage 803 à son arrivée sur le deuxième système de Fresnel 523, pour adopter une direction principale 526 du faisceau lumineux global produit. Les deux déviations observées sont avantageusement réalisées dans le même sens horaire ; on peut ainsi faire dévier un rayon lumineux d'angles supérieurs à 20 degrés, voire 50 degrés.

Pour concevoir les surfaces de chaque prisme on considère ces deux points de passage 802 et 803 comme points de construction. Un premier rayon issu de la source lumineuse, après une première déviation en rentrant dans la matière, arrive au premier point de construction 802 situé à une distance donnée de l'entrée du guide.,Le rayon de sortie de la matière passe par le deuxième point de construction 803 . On calcule l'orientation de la facette correspondant à cette déviation. Au point de construction 803, on procède de la même manière en utilisant le concept de retour inverse de la lumière. Le rayon cible correspond au rayon externe ayant subit sa déviation en sortie de matière. On peut donc calculer l'orientation de cette facette pour satisfaire la déviation choisie. La déviation totale est obtenue par la somme des deux angles de déviation. A noter qu'il est possible d'optimiser ce système de déviation selon les différents aspects que l'on veut conférer au dispositif d'éclairage et/ou de signalisation, tel que la déviation angulaire du faisceau global émis le dispositif d'éclairage et/ou de signalisation, la distance entre les sources lumineuses, le nombre de sources lumineuses. Le système laisse donc plus de liberté dans la conception du dispositif d'éclairage et/ou de signalisation. Ainsi, l'ensemble des faces de chaque dent d'un même système Fresnel, bien que globalement alignées, produisent la même déviation qu'un dioptre continu dont la courbe correspondrait aux courbes de chaque dents mises bout à bout et ne présenterait pas d'arrêté. On a donc une discrétisation d'un prisme équivalent de plus grande dimension pour chacun des systèmes Fresnel, les deux prismes équivalents associés permettant la déviation souhaitée. On obtient les mêmes déviations optiques qu'avec ces prismes équivalents mais sur une longueur, selon la direction principale, beaucoup plus réduite.

Avantageusement, chaque diode 101 produisant un cône 901 de rayons lumineux, on dispose, comme montré à la figure 9, le premier système de Fresnel au niveau où les rayons lumineux de deux cônes successifs se rejoignent. Un tel positionnement permet d'accentuer l'aspect homogène du faisceau lumineux global qui est produit par la pluralité de diodes 101.

Dans l'exemple représenté, le guide de lumière 500 présente enfin une troisième zone, à savoir une zone de sortie 530 supportant ici des pseudo-tores assurant la répartition spatiale des rayons lumineux constituant le faisceau lumineux global pour satisfaire la fonction d'éclairage ou de signalisation souhaitée.

D'une façon générale, la face de sortie 530 peut consister :
- soit en la création d'un système optique pour réaliser un dernier traitement du faisceau lumineux global, afin de réaliser la dispersion spatiale nécessaire pour remplir la fonction de signalisation recherchée ; il peut s'agir par exemple de motifs optiques classiques à base de pseudo tores dont les dimensions sont fonction du style recherché, ou encore de systèmes équivalents à de l'optique diffractive, complétée par une glace de fermeture transparente et optiquement neutre 2 fermant le boîtier 3 du dispositif d'éclairage et/ou de signalisation 1 renfermant le guide de lumière ;
- soit d'une face polie optique : le faisceau lumineux global est alors traité par une optique supportée par un écran interne supplémentaire du dispositif d'éclairage et/ou de signalisation, ou par la glace de fermeture ;
- soit d'une face diffusante pour améliorer davantage l'apparence continue et ainsi améliorer l'homogénéité de la luminance apparente.

Dans l'exemple représenté aux figures 4 à 9, le guide de lumière 500 est une pièce monobloc, réalisée en un unique matériau transparent, par exemple du type polyméthylméthacrylate (PMMA) ou polycarbonate (PC). Ainsi, on s'affranchit de problèmes de centrages des différents systèmes optiques les uns par rapport aux autres.

D'une manière générale, le système de double selon la présente invention est obtenu selon un premier procédé ou selon un deuxième procédé.

Le premier procédé consiste en la réalisation d'une version monobloc, telle que celle illustrée en figures 4 à 9 : l'espace 524 entre les deux systèmes de Fresnel est directement obtenu par la présence d'un insert dans le moule de fabrication. La distance séparant le premier système de Fresnel du deuxième système de Fresnel est alors typiquement comprise entre 2 et 6 millimètres.

Le deuxième procédé consiste en la réalisation d'une version multibloc : un mode de réalisation consiste à réaliser deux pièces, chacune des deux pièces supportant la moitié un des deux systèmes de Fresnel présents dans le deuxième système optique. Elles sont avantageusement constituées d'une matière transparente dont les caractéristiques de souplesse, propres au polycarbonate par exemple, permettent des assemblages par encliquetage de liaisons auto - bloquantes et permettent de reconstituer un ensemble cohérent, qui peut être consolidé soit par soudure réalisée par un faisceau laser, soit par divers appendices. On peut ainsi diminuer l'espace compris entre les deux systèmes de Fresnel, et améliorer l'efficience optique.

## Revendications

1. Dispositif d'éclairage et/ou de signalisation pour véhicule automobile, ledit dispositif comportant au moins une source lumineuse (101) chaque source lumineuse émettant, vers un guide de lumière (500) dudit dispositif, une pluralité de rayons lumineux (801) selon un volume d'émission présentant un axe central (103), ledit guide de lumière (500) guidant les rayons lumineux de manière à produire un faisceau lumineux global émis selon une direction principale d'émission (526), le guide de lumière (500) comportant, dans une zone centrale présentant une largeur centrale, un système optique central (521) comportant un premier système de Fresnel (522) et un deuxième système de Fresnel (523) coopérant pour provoquer une déviation des rayons lumineux émis par la au moins une source lumineuse (101) de type diode électroluminescente selon une direction globale de rayons déviés, **caractérisé en ce que** les premier (522) et deuxième (523) systèmes de Fresnel sont disposés en regard l'un de l'autre, un volume d'air (524) étant placé entre le premier système de Fresnel (522) et le deuxième système de Fresnel (523),
**et en ce que** la direction globale de rayons déviés présente avec ledit axe central (103) un angle supérieur à vingt degrés.

2. Dispositif d'éclairage ou de signalisation selon la revendication précédente **caractérisé en ce que** la direction globale de rayons déviés correspond à la direction principale (526) du faisceau lumineux.

3. Dispositif d'éclairage ou de signalisation selon l'une au moins des revendications précédentes **caractérisé en ce que** le premier système de Fresnel (522) et le deuxième système de Fresnel (523) présentent un écartement compris entre deux et six millimètres.

4. Dispositif d'éclairage ou de signalisation selon l'une au moins des revendications précédentes **caractérisé en ce que** ladite source lumineuse (101) est une diode électroluminescente, ledit volume d'émission correspondant à un cône d'émission (901) dont l'axe correspond à l'axe central (103).

5. Dispositif d'éclairage ou de signalisation selon l'une au moins des revendications précédentes **caractérisé en ce que** le guide de lumière (500) comporte un renfort inférieur (525) globalement disposé selon un plan sensiblement perpendiculaire à des plans contenant le premier système de Fresnel (522) et le deuxième système de Fresnel (523).

6. Dispositif d'éclairage ou de signalisation selon l'une au moins des revendications précédentes **caractérisé en ce que** le guide de lumière (500) comporte une zone d'entrée (110), présentant une épaisseur d'entrée (E1), équipée d'un système optique d'entrée (112) pour recevoir au moins une partie de la pluralité des rayons lumineux et pour collimater dans ladite épaisseur d'entrée lesdits rayons lumineux reçus.

7. Dispositif d'éclairage ou de signalisation selon l'une au moins des revendications précédentes **caractérisé en ce que** le guide de lumière (500) comporte une zone de sortie (130), présentant une largeur de sortie, équipée d'un système optique de sortie (530) pour recevoir et assurer une diffusion, dans ladite largeur de sortie, des rayons lumineux issus du système optique central.

8. Dispositif d'éclairage ou de signalisation selon la revendication précédente **caractérisé en ce que** la zone de sortie (130) présente une épaisseur de sortie faible devant la largeur de sortie.

9. Dispositif d'éclairage ou de signalisation selon l'une au moins des revendications précédentes **caractérisé en ce que** le premier système de Fresnel (522) est disposé selon un plan sensiblement perpendiculaire à l'axe central (103) des cônes d'émission (901), au niveau où les rayons lumineux de deux cônes consécutifs (901) se rejoignent.

10. Dispositif d'éclairage ou de signalisation selon l'une au moins des revendications précédentes **caractérisé en ce que** le guide de lumière (500) est une pièce monobloc.

11. Dispositif projecteur comportant au moins un dispositif d'éclairage ou de signalisation selon l'une au moins des revendications précédentes **caractérisé en ce qu'**il est d'un des types suivants : feu de recul, indicateur de direction, rappel de clignotant, feu antibrouillard, feu stop, feu stop supérieur, plafonnier, ligne de style éclairée.

## Patentansprüche

1. Beleuchtungs- und/oder Signalisierungsvorrichtung für ein Kraftfahrzeug, wobei die Vorrichtung mindestens eine Lichtquelle (101) umfasst, wobei jede Lichtquelle zu einem Lichtleiter (500) der Vorrichtung hin eine Vielzahl von Lichtstrahlen (801) gemäß einem Abstrahlungsraum abstrahlt, der eine zentrale Achse (103) aufweist, wobei der Lichtleiter (500) die Lichtstrahlen so leitet, dass ein entlang einer Hauptabstrahlungsrichtung (526) abgestrahlter Gesamtlichtstrahl erzeugt wird, wobei der Lichtleiter (500) in einem zentralen Bereich, der eine zentrale Breite aufweist, ein zentrales optisches System (521) umfasst, das ein erstes Fresnel-System (522) und ein zweites Fresnel-System (523) umfasst, die zusammenwirken, um eine Ablenkung der von der mindestens einen Lichtquelle (101) vom Leuchtdiodentyp abgestrahlten Lichtstrahlen entlang einer Gesamtrichtung abgelenkter Strahlen zu bewirken, **dadurch gekennzeichnet, dass** das erste (522) und das zweite (523) Fresnel-System einander gegenüber angeordnet sind, wobei zwischen dem ersten Fresnel-System (522) und dem zweiten Fresnel-System (523) ein Luftraum (524) platziert ist,
und dass die Gesamtrichtung abgelenkter Strahlen mit der zentralen Achse (103) einen Winkel von mehr als zwanzig Grad bildet.

2. Beleuchtungs- oder Signalisierungsvorrichtung nach dem vorhergehenden Anspruch, **dadurch gekennzeichnet, dass** die Gesamtrichtung abgelenkter Strahlen der Hauptrichtung (526) des Lichtstrahls entspricht.

3. Beleuchtungs- oder Signalisierungsvorrichtung nach mindestens einem der vorhergehenden Ansprüche, **dadurch gekennzeichnet, dass** das erste Fresnel-System (522) und das zweite Fresnel-System (523) einen Abstand zwischen zwei und sechs Millimetern aufweisen.

4. Beleuchtungs- oder Signalisierungsvorrichtung nach mindestens einem der vorhergehenden Ansprüche, **dadurch gekennzeichnet, dass** die Lichtquelle (101) eine Leuchtdiode ist, wobei der Abstrahlungsraum einem Abstrahlungskegel (901) entspricht, dessen Achse der zentralen Achse (103) entspricht.

5. Beleuchtungs- oder Signalisierungsvorrichtung nach mindestens einem der vorhergehenden Ansprüche, **dadurch gekennzeichnet, dass** der Lichtleiter (500) eine untere Verstärkung (525) umfasst, die insgesamt entlang einer Ebene angeordnet ist, die im Wesentlichen senkrecht zu der das erste Fresnel-System (522) und das zweite Fresnel-System (523) enthaltenden Ebene verläuft.

6. Beleuchtungs- oder Signalisierungsvorrichtung nach mindestens einem der vorhergehenden Ansprüche, **dadurch gekennzeichnet, dass** der Lichtleiter (500) einen Eintrittsbereich (110) umfasst, der eine Eintrittsdicke (E1) aufweist und mit einem optischen Eintrittssystem (112) ausgestattet ist, um zumindest einen Teil der Vielzahl von Lichtstrahlen zu empfangen und um die empfangenen Lichtstrahlen in der Eintrittsdicke zu bündeln.

7. Beleuchtungs- oder Signalisierungsvorrichtung nach mindestens einem der vorhergehenden Ansprüche, **dadurch gekennzeichnet, dass** der Lichtleiter (500) einen Austrittsbereich (130) umfasst, der eine Austrittsbreite aufweist und mit einem optischen Austrittssystem (530) ausgestattet ist, um Lichtstrahlen, die aus dem zentralen optischen System kommen, zu empfangen und eine Streuung in der Austrittsbreite zu gewährleisten.

8. Beleuchtungs- oder Signalisierungsvorrichtung nach dem vorhergehenden Anspruch, **dadurch gekennzeichnet, dass** der Austrittsbereich (130) vor der Austrittsbreite eine geringe Austrittsdicke aufweist.

9. Beleuchtungs- oder Signalisierungsvorrichtung nach mindestens einem der vorhergehenden Ansprüche, **dadurch gekennzeichnet, dass** das erste Fresnel-System (522) entlang einer Ebene, die im Wesentlichen senkrecht zur zentralen Achse (103) der Abstrahlungskegel (901) verläuft, in der Höhe angeordnet ist, in der sich die Lichtstrahlen von zwei aufeinander folgenden Kegeln (901) treffen.

10. Beleuchtungs- oder Signalisierungsvorrichtung nach mindestens einem der vorhergehenden Ansprüche, **dadurch gekennzeichnet, dass** der Lichtleiter (500) einteilig ist.

11. Scheinwerfervorrichtung mit mindestens einer Beleuchtungs- oder Signalisierungsvorrichtung nach mindestens einem der vorhergehenden Ansprüche, **dadurch gekennzeichnet, dass** sie von einer der folgenden Arten ist: Rückfahrleuchte, Fahrtrichtungsanzeiger, Wiederholungsblinker, Nebelscheinwerfer, Bremsleuchte, dritte Bremsleuchte, Deckenleuchte, Zierlichtleiste.

## Claims

1. Lighting and/or signalling device for a motor vehicle, said device comprising at least one light source (101), each light source emitting, towards a light guide (500) of the said device, a plurality of light rays (801) along an emission volume having a central axis (103), said light guide (500) guiding the light rays in such a way as to produce an overall light beam emitted along a main emission direction (526), the light guide (500) comprising, in a central zone having a central width, a central optical system (521) comprising a first Fresnel system (522) and a second Fresnel system (523) cooperating to cause a deflection of the light rays emitted by the at least one light source (101) of the light-emitting diode type in a global direction of deflected rays, **characterized in that** the first (522) and second (523) Fresnel systems are arranged opposite each other, an air volume (524) being placed between the first Fresnel system (522) and the second Fresnel (523) systems,
**and in that** the overall direction of deflected rays has with said central axis (103) an angle greater than twenty degrees.

2. Lighting or signalling device according to the preceding claim **characterized in that** the overall direction of deflected beams corresponds to the main direction (526) of the light beam.

3. Lighting or signalling device according to at least one of the preceding claims, **characterised in that** the first Fresnel system (522) and the second Fresnel system (523) have a spacing of between two and six millimetres.

4. Lighting or signalling device according to at least one of the preceding claims, **characterized in that** the said light source (101) is a light-emitting diode, the said emission volume corresponding to an emission cone (901) whose axis corresponds to the central axis (103).

5. Lighting or signalling device according to at least one of the preceding claims, **characterized in that** the light guide (500) comprises a lower reinforcement (525) arranged overall in a plane substantially perpendicular to planes containing the first Fresnel system (522) and the second Fresnel system (523).

6. Lighting or signalling device according to at least one of the preceding claims, **characterised in that** the light guide (500) comprises an input zone (110), having an input thickness (E1), equipped with an optical input system (112) for receiving at least part of the plurality of light rays and for collimating said received light rays in said input thickness.

7. Lighting or signalling device according to at least one of the preceding claims, **characterized in that** the light guide (500) comprises an output zone (130), having an output width, equipped with an output optical system (530) for receiving and ensuring a diffusion, in said output width, of the light rays coming from the central optical system.

8. Lighting or signalling device according to the preceding claim **characterized in that** the output zone (130) has a small output thickness in front of the exit width.

9. Lighting or signalling device according to at least one of the preceding claims, **characterized in that** the first Fresnel system (522) is arranged in a plane substantially perpendicular to the central axis (103) of the emission cones (901), at the level where the light rays of two consecutive cones (901) meet.

10. Lighting or signalling device according to at least one of the preceding claims **characterized in that** the light guide (500) is a one-piece part.

11. A headlamp device comprising at least one lighting or signalling device according to at least one of the preceding claims, **characterised in that** it is of one of the following types: reversing lamp, direction indicator, indicator return, fog lamp, stop lamp, upper stop lamp, dome light, illuminated style line.
